# EUROPÄISCHE PATENTSCHRIFT

(11) **EP 3 670 008 B1**
(45) Veröffentlichungstag und Bekanntmachung des Hinweises auf die Patenterteilung: **27.01.2021**
(21) Anmeldenummer: 18214382.6
(22) Anmeldetag: 20.12.2018
(51) Int. Cl.: B08B 3/04, B08B 3/10, B08B 3/12, B29C 64/35, B29C 71/04, B29C 71/00, B29C 35/08

(54) **NACHBEARBEITUNGSANORDNUNG FÜR GENERATIV DURCH PHOTOPOLYMERISATION AUFGEBAUTE FORMKÖRPER**
POST-PROCESSING ARRANGEMENT FOR MOULDED ARTICLES MANUFACTURED IN A GENERATIVE MANNER BY MEANS OF PHOTOPOLYMERISATION
DISPOSITIF DE TRAITEMENT ULTÉRIEUR POUR CORPS MOULÉS FABRIQUÉS DE MANIÈRE ADDITIVE PAR PHOTOPOLYMÉRISATION

(43) Veröffentlichungstag der Anmeldung: 24.06.2020
(73) Patentinhaber: Ivoclar Vivadent AG, 9494 Schaan (LI)
(72) Erfinder: John, Hendrik, 9470 Buchs SG (CH)
(74) Vertreter: Uexküll & Stolberg

(56) Entgegenhaltungen:
- WO-A1-2018/169824
- US-A- 5 248 456
- US-A1- 2009 283 119

## Beschreibung

Die vorliegende Erfindung betrifft eine Nachbearbeitungsanordnung für generativ durch Photopolymerisation aufgebaute Formkörper, die eine Reinigungsstation zur Bereithaltung einer Reinigungswanne für den Formkörper und eine Nachvergütungsstation zur Nachbelichtung des Formkörpers aufweist.

Es gibt inzwischen viele Verfahrensweisen zum Aufbau eines Formkörpers aus flüssigem, photopolymerisierbarem Material unter Anwendung einer stereolithographiebasierten generativen Fertigung (auch als Rapid Prototyping oder additive Manufacturing) durch ortselektive Belichtung aufeinanderfolgend übereinander ausgehärteter Schichten. Dabei wird an einer Bauplattform eine Schicht aus viskosem, flüssigem Material definiert und die Schicht von einer Belichtungseinheit in einem Belichtungsgebiet mit für diese Schicht vorgegebener Kontur durch ortsselektives Belichten polymerisiert. Darauf wird an der polymerisierten Schicht eine weitere Schicht aus photopolymerisierbarem Material definiert und diese zuletzt definierte Schicht mit einer für diese zuletzt definierte Schicht vorgegebener Kontur durch Belichten polymerisiert. Die beiden zuletzt genannten Schritte werden sooft wiederholt, bis durch die Abfolge von ausgehärteten Schichten mit schichtweise vorgegebenen Konturen ein Formkörper mit vorgegebener Form gebildet ist.

Ein solches Verfahren zum Aufbau eines Formkörpers ist zum Beispiel aus WO 2010/045950 A1 bekannt, die sich insbesondere auf den Aufbau von Dentalrestaurationen aus flüssigen, photopolymerisierbaren Materialien bezieht. Bei dem bekannten Verfahren wird eine Bauplattform vertikal beweglich über einem Wannenboden gehalten, der lichtdurchlässig ausgebildet ist. Unterhalb des Wannenbodens befindet sich eine Belichtungseinheit. Die Bauplattform wird zunächst in das photopolymerisierbare Material in der Wanne soweit abgesenkt, bis zwischen der Bauplattform und dem Wannenboden nur noch eine Schicht mit der gewünschten Schichtdicke aus photopolymerisierbarem Material verbleibt. Anschließend wird diese Schicht mit einer vorgegebenen Kontur durch die Belichtungseinheit belichtet und dadurch ausgehärtet. Nach Anheben der Bauplattform wird photopolymerisierbares Material aus der Umgebung nachgeführt und die Bauplattform erneut abgesenkt, wobei die Absenkung so gesteuert wird, dass photopolymerisierbares Material aus dem Zwischenraum verdrängt wird und der Abstand zwischen der zuletzt gebildeten Schicht und dem Wannenboden eine Schicht mit der gewünschten Dicke definiert. Danach werden die letzten Schritte so oft wiederholt, bis durch die aufeinanderfolgende Aushärtung von Schichten mit jeweils vorgegebener Kontur ein Formkörper mit der gewünschten Form hergestellt ist.

Nach der Polymerisierung der letzten Schicht wird der Formkörper aus der Bauvorrichtung entnommen, indem die Bauplattform aus einer Halterung in der Bauvorrichtung gelöst und mit dem daran haftenden Formkörper entnommen wird. In dieser Phase ist der Formkörper noch feucht, d.h. von flüssigem, photopolymerisierbarem Material benetzt. Ferner kann es noch Bereiche im Formkörper mit nicht vollständig auspolymerisiertem Material geben. Daher wird der entnommene Formkörper einer Nachbearbeitung zur Reinigung und zur Nachvergütung durch Nachbelichtung unterzogen. Dazu wird im Stand der Technik beispielsweise folgendermaßen vorgegangen, wobei der Oberbegriff von Anspruch 1 auf der dabei verwendeten Nachbearbeitungsanordnung beruht. Die Bauplattform mit dem daran hängenden Formkörper wird in eine Halterahmen gesteckt und dieser dann in eine erste Reinigungswanne mit Isopropanol zur Grobreinigung getaucht. Das Isopropanolbad wird durch Magnetrührer in Bewegung gesetzt, um noch anhaftendes, unpolymerisiertes Material von der Oberfläche des Formkörpers zu lösen. Nach dieser Grobreinigung wird der Halterahmen aus der Reinigungswanne entnommen und in eine zweite, separate Reinigungswanne zur Feinreinigung getaucht. Auch hier wird die Reinigung durch Magnetrührer unterstützt. Alternativ wird als Aktuator auch Ultraschall eingesetzt, was aber im direkten Umgang mit Lösungsmitteln aus Gründen der Arbeitssicherheit sehr umstritten ist und nicht empfohlen wird. Anschließend wird der Halterahmen aus dem zweiten Reinigungsbecken gehoben, und darauf folgend wird der Formkörper mit Druckluft abgeblasen, um das Isopropanol mit gelöstem Photopolymer zu entfernen und den Formkörper zu trocknen. Schließlich wird der Halterahmen mit dem daran an der Bauplattform hängenden Formkörper in ein separates Nachvergütungsgerät gestellt und dort einer Nachbelichtung unterzogen, um noch unpolymerisierte Reste im Formkörper zu polymerisieren. Dabei erfolgt die Handhabung der in dem Halterahmen gehaltenen Bauplattform mit dem Formkörper sowie deren Transport in und zwischen den Reinigungswannen und zu dem Nachvergütungsgerät manuell. Auch die Einstellung der Magnetrührer, die Kontrolle der Reinigungsdauern in den beiden Reinigungswannen sowie die Einstellung der Betriebsparameter des Nachvergütungsgerätes erfolgt ebenfalls manuell durch eine Bedienungsperson. Dabei muss die Bedienungsperson sich mit Handschuhen schützen, um nicht mit dem feuchten Formkörper und den Reinigungsflüssigkeiten in Berührung zu kommen. Andere Systemanbieter empfehlen, die Formkörper vor der Reinigung und Nachbelichtung von der Bauplattform zu entfernen, wobei die Formkörper selbst berührt/angefasst werden müssen und vereinzelt gehandhabt werden. Diese zuvor beschriebene Nachbearbeitungsanordnung benötigt einerseits viel Platz (zwei nebeneinander stehende Reinigungswannen und ein weiteres daneben stehendes Nachverarbeitungsgerät), und ist andererseits personalintensiv, da die Handhabung und der Transport des in dem Halterahmen gehaltenen Formkörpers manuell durch Personal erfolgen muss, das auch die Betriebsparameter beim Reinigen und bei der Nachvergütung manuell einstellen muss. Daher ist die Nachbearbeitung in einer solchen Nachbearbeitungsanordnung personalintensiv und fehleranfällig, da es zu fehlerhaften Einstellungen beim Reinigen und bei der Nachvergütung kommen kann.

Daneben gibt es auch bereits eine Nachbearbeitungsanordnung, bei der die beiden Reinigungswannen durch einen Rahmen nebeneinander liegend gehalten sind, so dass die beiden Reinigungswannen als Einheit gehandhabt werden können. Das Problem des hohen Platzbedarfs ist dadurch allerdings nicht gemildert, denn die beiden Wannen sind nebeneinander liegend angeordnet und nehmen insofern eine große Standfläche ein. Außerdem nimmt auch das Nachvergütungsgerät als separates Gerät weiteren Platz ein. Auch die Probleme der Personalintensität der Durchführungsschritte der Nachbearbeitung und die Fehleranfälligkeit bei der Auswahl und Einstellung der richtigen Durchführungsschritte werden dadurch nicht angegangen.

Aus US 2016/0107392 A1 ist eine Nachbearbeitungsanordnung für durch 3D-Drucker erzeugte Formkörper bekannt. In der Nachbearbeitungsanordnung gibt es ein einzelnes oder mehrere unabhängige Nachbearbeitungsgeräte. Als Nachbearbeitungsgeräte werden Geräte zum Aufbringen von Farbe oder zur Oberflächenbearbeitung durch Schleifmittel genannt. Das oder die Nachbearbeitungsgeräte und der 3D-Drucker stehen mit einer Kommunikationseinheit in Verbindung, die die 3D-Objektinformationen zur Steuerung des 3D-Druckers an diesen sendet und Nachbearbeitungsinformationen an das oder die Nachbearbeitungsgeräte sendet, die dann die Nachbearbeitungsoperationen auf Grundlage dieser Informationen automatisch durchführen. Im Falle mehrerer Nachbearbeitungsgeräte wird der nachzubearbeitende Formkörper manuell zwischen den Nachbearbeitungsgeräten transportiert oder automatisch durch eine automatische Transporteinrichtung. Die Nachbearbeitungsvorgänge der Reinigung durch flüssiges Reinigungsmittel und der Nachvergütung durch Nachbelichtung sind in dem Dokument nicht erwähnt.

Aus der US 5,248,456 ist eine Nachbearbeitungsanordnung gemäß dem Oberbegriff des Anspruchs 1 bekannt.

Es ist Aufgabe der vorliegenden Erfindung, eine Nachbearbeitungsanordnung für generativ durch Photopolymerisation aufgebaute Formkörper, die für die Nachbearbeitungsschritte der Reinigung des Formkörpers in einem flüssigen Reinigungsmittel und der Nachvergütung durch Nachbelichtung eingerichtet ist, so auszugestalten, dass sie einen kompakten, platzsparenden Aufbau hat und für den Benutzer bequem und sicher zur Durchführung der Nachbearbeitung betreibbar ist.

Zur Lösung dieser Aufgabe dient die Nachbearbeitungsanordnung mit den Merkmalen des Patentanspruchs 1. Vorteilhafte Ausführungsformen der Erfindung sind in den Unteransprüchen aufgeführt.

Erfindungsgemäß ist die Nachbearbeitungsanordnung so ausgestaltet, dass die Reinigungsstation und die Nachvergütungsstation in einem auf einer horizontalen Standfläche standfähigen Gehäuse untergebracht sind. In einem unteren Abschnitt des Gehäuses befindet sich die Reinigungsstation und in einem vertikal zur Standfläche darüber liegenden oberen Abschnitt ist die Nachvergütungsstation untergebracht. Der untere Abschnitt und der obere Abschnitt sind durch einen Durchgang miteinander in Verbindung. In der Nachvergütungsstation ist ferner eine Halterung angebracht, an der der Formkörper direkt der indirekt, z.B. an einer Bauplattform hängend, die in die Halterung eingesetzt wird, in einer zur Nachbelichtung geeigneten Position aufhängbar ist. Das ist gegeben, wenn der Formkörper so für die Nachbelichtungsstrahlung in der Nachvergütungsstation frei zugänglich ist. Ferner ist die Reinigungswanne an einer Hubeinrichtung gehalten, die dazu ausgestaltet ist, um die Reinigungswanne aus einer Bereithaltungsstellung in der Reinigungsstation vertikal nach oben durch den Durchgang in die Nachvergütungsstation in eine Reinigungsstellung anheben zu können, in der der an der Halterung aufgehängte Formkörper von der Reinigungswanne umgeben ist. In der Reinigungsstellung liegt der obere Rand der Reinigungswanne vertikal oberhalb des Formkörpers, so dass bei mit Reinigungsflüssigkeit aufgefüllter Wanne der Formkörper vollständig in die Reinigungsflüssigkeit eintaucht. Die Reinigungswanne kann durch die Hubeinrichtung entsprechend aus der Reinigungsstellung wieder in die Bereithaltungsstellung in der Reinigungsstation abgesenkt werden. Die Reinigungsstation umfasst also Raum zur Unterbringung der Reinigungswanne in der Bereithaltungsstellung. Typischerweise kann die Reinigungsstation auch eine Fördereinrichtung für Reinigungsflüssigkeit und eine Leitung zur Verbindung der Fördereinrichtung mit der Reinigungswanne umfassen; die Hubeinrichtung kann ebenfalls in der Reinigungsstation und unterhalb der Reinigungswanne untergebracht sein und mit einem nach oben ausstellbaren Betätigungselement die Reinigungswanne tragen.

Weiterhin ist eine Steuereinrichtung vorhanden und dazu eingerichtet, den Betrieb der Hubeinrichtung, des Verschlusses und der Reinigungs- und der Nachvergütungsstation so zu steuern, dass nach Aufhängen des Formkörpers an der Halterung die Hubeinrichtung die Reinigungswanne in die Reinigungsstellung anhebt, um den Formkörper durch Reinigungsflüssigkeit in der Reinigungswanne zu reinigen. Nach Abschluss des Reinigungsvorgangs senkt die Hubeinrichtung die Reinigungswanne wieder nach unten in die Bereithaltungsstellung ab, wonach die Steuereinrichtung die Nachvergütungsstation zur Durchführung einer Nachbelichtung steuert.

Die Integration von Reinigungsstation und Nachvergütungsstation in vertikal übereinander liegender Beziehung in einem Gehäuse erlaubt einen besonders platzsparenden und kompakten Aufbau der Nachvergütungsanordnung. Dabei hat die Unterbringung der Reinigungsstation unterhalb der darüber liegenden Nachvergütungsstation den Vorteil, dass in einem solchen Aufbau die Reinigungswanne durch die Hubeinrichtung von unten aus der Reinigungsstation nach oben in die Nachvergütungsstation angehoben werden kann, so dass die an der Halterung aufgehängten Formkörper in die Reinigungswanne eintauchen. Nach Abschluss der Reinigungsschritte, z.B. aufeinander folgende Reinigungsschritte mit verschiedenen Reinigungsflüssigkeiten, Bewegung der Reinigungsflüssigkeit, z.B. durch Magnetrührer in der Reinigungswanne, wird die Reinigungswanne durch die Steuereinrichtung durch Betreiben der Hubeinrichtung automatisch nach unten in die Reinigungsstation verfahren, wobei diese Schritte durch ein Betriebsprogramm in der Steuereinrichtung gesteuert werden. Anschließend schließt die Steuereinrichtung den Verschluss am Durchgang, wonach die Steuereinrichtung den Betrieb der Nachvergütungsstation zur Nachbelichtung des Formkörpers startet und steuert. Die vertikal übereinander liegende Anordnung von Reinigungsstation und Nachvergütungsstation in einem standfähigen Gehäuse ermöglicht es, die Nachbearbeitungsanordnung auf einer sehr geringen Stellfläche unterzubringen, so dass diese platzsparend aufgestellt werden kann.

Ferner muss ein Bediener einen nachzubearbeitenden Formkörper nur einmal an der Halterung aufhängen, z.B. die Bauplattform mit einem oder mehreren daran hängenden Formkörpern in die Halterung einsetzen, wonach die Nachbearbeitungsschritte der Reinigung und der Nachbelichtung automatisch unter Steuerung von Betriebsprogrammen, die in der Steuereinrichtung ablaufen, ausgeführt werden, so dass die Bedienungsperson in dieser Zeit nicht mehr eingreifen muss und nicht mehr mit dem Formkörper in Kontakt kommt. Letzteres vermeidet die Gefahr, dass die Bedienungsperson mit gefährlichen Substanzen wie am Formkörper anhaftenden Monomer oder Reinigungsflüssigkeiten in Kontakt kommen kann. Ferner kann die Bedienungsperson sich während der Ausführung der Nachbearbeitungsschritte in der Reinigungsstation und in der Nachvergütungsstation anderen Aufgaben zuwenden.

Vorzugsweise ist der Durchgang mit einem Verschluss versehen , der in einer ersten Alternative von der Steuereinrichtung geöffnet und geschlossen werden kann. In diesem Fall ist die Steuereinrichtung dazu eingerichtet, den Verschluss zu öffnen, bevor die Reinigungswanne von der Hubeinrichtung angehoben den Durchgang passiert, und den Verschluss wieder zu schließen, nachdem nach Abschluss des Reinigungsvorgangs die Reinigungswanne durch die Hubeinrichtung nach unten in die Reinigungsstation gefahren ist. Nach einer zweiten Alternative ist der Durchgang mit einem Verschluss versehen ist, der durch das Anheben der Reinigungswanne passiv geöffnet wird und sich nach dem Absenken der Reinigungswanne passiv wieder schließt. In beiden Fällen kann auf diese Weise der Innenraum der Nachvergütungsstation gegenüber der Reinigungsstation abgeschlossen werden, wenn die Nachbelichtung durchgeführt werden soll.

In einer bevorzugten Ausführungsform ist ein Motor vorhanden, der auf die Halterung einwirkt, diese mit dem daran aufgehängten Formkörper in Rotation zu versetzen, um den Formkörper durch Abschleudern von noch anhaftender unpolymerisierter Flüssigkeit zu reinigen. Die Steuereinrichtung kann vorzugsweise dazu eingerichtet sein, diesen Schritt durch Aktivieren des Motors zu starten, nachdem die Reinigungswanne aus der Bereithaltungsstellung in die Reinigungsstellung angehoben ist, in der die Reinigungswanne den Formköper seitlich umgibt, so dass abgeschleuderte Materialien in der Reinigungswanne aufgefangen werden. Anschließend kann die Steuereinrichtung dann den Reinigungsvorgang durch Füllen der Reinigungswanne mit Reinigungsflüssigkeit starten.

Vorzugsweise ist die Reinigungsstation mit einer Fördervorrichtung versehen, die mit wenigstens einem Behälter für Reinigungsflüssigkeit verbunden ist. Die Fördervorrichtung ist weiterhin über eine flexible Leitung mit der Reinigungswanne verbunden, um so Reinigungsflüssigkeit aus dem Behälter in die Reinigungswanne pumpen zu können. Die flexible Leitung zwischen Fördervorrichtung und Reinigungswanne hat eine ausreichende Länge, um von der Fördervorrichtung bis zur Reinigungswanne in der Reinigungsstellung reichen zu können, so dass das an die Reinigungswanne angeschlossene Ende der flexiblen Leitung der vertikalen Anhebung der Reinigungswanne in die Reinigungsstellung folgen kann, die flexible Leitung kann sich dabei z.B. von einer Rolle abwickeln. Ferner ist die Steuereinrichtung dazu eingerichtet, den Betrieb der Fördervorrichtung so zu steuern, dass die Reinigungswanne während sie durch die Hubeinrichtung in die Reinigungsstellung angehoben wird und/oder nachdem sie durch die Hubeinrichtung in die Reinigungsstellung angehoben ist, gefüllt wird, und anschließend den Betrieb der Reinigungsstation beim Reinigungsvorgang zu steuern. Dazu kann die Steuereinrichtung z.B. einen Magnetrührer in der Reinigungswanne aktivieren, um die Reinigungsflüssigkeit in Bewegung zu versetzen und so den Reinigungsvorgang zu intensivieren. Alternativ kann der Reinigungsvorgang unterstützt werden, indem die Halterung mit dem daran aufgehängten Formkörper in Rotation um eine vertikale Drehachse versetzt wird, um so den Formköper relativ zu der umgebenden Reinigungsflüssigkeit zu bewegen und dadurch den Reinigungsvorgang zu intensivieren.

Vorzugsweise ist die Reinigungsstation mit wenigstens zwei Behältern mit Reinigungsflüssigkeiten verbunden und die Fördervorrichtung mit einer Pumpe und Ventileinrichtungen versehen, die unter Steuerung der Steuereinrichtung selektiv Reinigungsflüssigkeit aus einem ausgewählten der wenigstens zwei Behälter in die Reinigungswanne fördern und nach Abschluss des Reinigungsvorgangs aus der Reinigungswanne abpumpen. Nach Abschluss des Reinigungsvorgangs wird die Reinigungsflüssigkeit in der Regel aus der Reinigungswanne wieder in den Behälter zurückgepumpt, aus dem sie entnommen worden ist. Nach der Reinigung mit einer Reinigungsflüssigkeit kann die Steuereinrichtung nach Maßgabe eines darin gespeicherten Reinigungsprogramms durch Steuerung der Pumpe und der Ventileinrichtungen eine andere Reinigungsflüssigkeit aus einem anderen ausgewählten Behälter mit Reinigungsflüssigkeit in die Reinigungswanne pumpen, einen weiteren Reinigungsvorgang durchführen und die Reinigungsflüssigkeit anschließend wieder in den Behälter abpumpen, aus dem sie stammt. So können z.B. eine grobe Vorreinigung und anschließend eine Feinreinigung durchgeführt werden, wobei für die grobe Vorreinigung Reinigungsflüssigkeit verwendet werden kann, die bereits mehrfach gebraucht worden ist und einige Verunreinigungen enthält, während für die Feinreinigung Reinigungsflüssigkeit mit höherer Reinheit verwendet werden kann. Wie bereits erwähnt kann, um die Reinigungsflüssigkeit in Bewegung zu versetzen und dadurch die Reinigungswirkung zu erhöhen, am Wannenboden ein Magnetrührer oder alternativ ein Ultraschallaktuator zum Einsatz kommen.

Auf diese Weise ist es möglich, mehrere Reinigungsvorgänge mit verschiedenen Reinigungsflüssigkeiten (die Reinigungsflüssigkeiten können chemisch die gleiche Grundform haben, aber unterschiedliche Anteile von Verunreinigungen durch photopolymerisierbares Material aus vorhergehenden Reinigungsvorgängen enthalten) in einer einzigen Reinigungswanne durchzuführen, was wesentlich weniger Platz in Anspruch nimmt als die im Stand der Technik vorhandenen, nebeneinander stehenden Reinigungswannen mit den jeweiligen Reinigungsflüssigkeiten.

In einer vorteilhaften Ausführungsform ist Nachvergütungsstation mit wenigstens zwei Lichtquellen zur Nachbelichtung des Formkörpers mit unterschiedlichen Wellenlängen versehen. Dabei sind die zwei (oder mehr) Lichtquellen so ausgewählt, dass ihre Wellenlängen sich aus einer Kombination von zwei oder mehr der Bereiche 360 - 370 nm, 380 - 390 nm, 400 - 410 nm und 455 - 465 nm zusammensetzen.

In einer vorteilhaften Ausführungsform ist die Steuereinrichtung mit einer Aufnahmeeinrichtung zur Aufnahme von Informationen über die Eigenschaften des nachzubearbeitenden Formkörpers verbunden. Die Steuereinrichtung hat ferner einen Speicher, in dem Betriebsvorgabe für die Reinigungsstation und die Nachvergütungsstation und eine Zuordnungsvorschrift gespeichert sind, die ein oder mehrere Betriebsprogramme nach Maßgabe der Informationen zu Eigenschaften des Formkörpers zuordnet. Die Steuereinrichtung ist dann dazu eingerichtet, nach Aufnahme der Informationen über die Eigenschaften des Formkörpers die zugeordneten Betriebsprogramme aufzurufen und ablaufen zu lassen und die Reinigungsstation und die Nachvergütungsstation nach Maßgabe der aufgerufenen Betriebsprogramme zu steuern. Die Informationen über die Eigenschaften des Formkörpers können zum Beispiel Angaben über das photopolymerisierbare Material enthalten wodurch z.B. die Nachvergütungsstation abhängig von der Art des Materials im Hinblick auf Belichtungsdauer, Wellenlängen der Nachbelichtung etc. speziell zugeschnitten auf den gerade nachzubearbeitenden Formkörper eingestellt sein können.

Die Aufnahmeeinrichtung kann z.B. eine manuelle Eingabeeinrichtung an der Nachbearbeitungsanordnung sein, die zur manuellen Eingabe von Informationen über die Eigenschaften des Formkörpers durch einen Benutzer ausgestaltet ist. Die Aufnahmeeinrichtung kann z.B. eine Tastatur oder einen Touch-Screen umfassen.

Alternativ umfasst die Aufnahmeeinrichtung eine Leseeinrichtung, die zum automatischen Lesen eines mit der Bauplattform oder dem Formkörper verbundenen oder letzterem zugeordneten Datenträgers mit Informationen über die Eigenschaften des Formkörpers ausgestaltet ist. Beispielsweise ist der Datenträger ein mit der Bauplattform verbundener RFID-Transponder, der Informationen über den an der Bauplattform aufgebauten Formkörper enthält. Die Informationen über den Formkörper können dessen geometrischer Eigenschaften, verwendete Baumaterialien und Bauparameter wie Belichtungsdauern etc. umfassen. Alternativ kann der Datenträger ein Strichcode oder ein DataMatrix-Code sein, der auf die Bauplattform aufgebracht oder in den Formkörper integriert ist und der von dem Lesegerät erfasst und der Steuereinrichtung in der Nachbearbeitungsanordnung übermittelt wird, bevor die Bauplattform an der Halterung in der Nachbearbeitungsanordnung eingehängt wird.

In einer vorteilhaften Ausführungsform ist die Halterung zum Einhängen des Formkörpers so ausgestaltet, dass der Formkörper an der Halterung so gehalten wird, dass er davon herabhängend gehalten wird, so dass er wenigstens aus der gesamten unteren Hemisphäre für die Strahlung der Lichtquellen der Nachvergütungsstation und für die Reinigungsflüssigkeit in der Reinigungswanne während des Reinigungsvorgangs frei zugänglich ist. Mit anderen Worten besteht wenigstens über die untere Hemisphäre unterhalb der Halterung freier Zugang zu dem Formkörper für die Strahlung der Nachvergütungsstation und die Reinigungsflüssigkeit in der Reinigungswanne.

In einer bevorzugten Ausführungsform ist die Halterung dazu ausgestaltet, dass eine Bauplattform mit dem oder den daran anhaftenden Formkörpern in der Halterung einhängbar ist, so dass der Formkörper nach unten weisend an der Bauplattform hängt und unterhalb der Halterung frei zugänglich ist, d.h. es besteht wenigstens über die untere Hemisphäre unterhalb der Bauplattform freier Zugang zu dem Formkörper für die Strahlung der Nachvergütungsstation und die Reinigungsflüssigkeit in der Reinigungswanne. In dieser Ausführungsform wird der Formkörper nach Abschluss des Bauvorgangs an der Bauplattform haftend mit dieser aus der Bauvorrichtung entnommen und dann mit der Bauplattform in die Nachbearbeitungsanordnung eingeführt und in der Halterung eingesetzt. Die Halterung kann dabei z.B. mit einem Adapter versehen sein, der es ermöglicht, Bauplattformen mit verschiedenen Größen einzuhängen.

In einer bevorzugten Ausführungsform hat der obere Abschnitt des Gehäuses, in dem die Nachvergütungsstation untergebracht ist, in seiner Außenwand eine Klappe, die geöffnet werden kann, um Zugang ins Innere der Nachvergütungsstation zu erhalten, wobei die Klappe so angeordnet ist, dass der Formkörper oder die Bauplattform durch die Öffnung der geöffneten Klappe eingeführt und direkt in die Halterung eingesetzt werden kann. Entsprechend kann nach Abschluss der Nachbearbeitung die Klappe geöffnet werden, um den nachbearbeiteten Formkörper wieder zu entnehmen.

In einer bevorzugten Ausführungsform sind der obere Abschnitt und der untere Abschnitt des Gehäuses lösbar miteinander verbunden. Das bedeutet, dass die Nachvergütungsstation im oberen Abschnitt und die Reinigungsstation im unteren Abschnitt jeweils als Module ausgebildet sein können, die vertikal übereinander liegend miteinander verbunden werden können und die jeweils eine Öffnung haben, die im verbundenen Zustand der oberen und unteren Abschnitt zueinander ausgerichtet den Durchgang zum vertikalen Transport der Reinigungswanne zwischen der Reinigungsstation und der Nachvergütungsstation bilden. Der Verschluss zum selektiven Öffnen und Schließen des Durchgangs ist dann an der Öffnung in der Unterwand des oberen Abschnitts oder in der Öffnung in der Oberwand des unteren Abschnitts angeordnet.

In einer bevorzugten Ausführungsform ist die Steuereinrichtung in einem lösbaren dritten Abschnitt des Gehäuses untergebracht. Dabei sind die voneinander lösbaren oberen und unteren Abschnitte und der dritte Abschnitt des Gehäuses so ausgestaltet, dass der dritte Abschnitt mit der Steuereinrichtung unter dem unteren Abschnitt an diesem anbringbar ist. Dabei sind elektrische Verbindungen vorhanden, die die Steuereinrichtung mit der Reinigungsstation und der Nachvergütungsstation verbinden. Auch der obere Abschnitt kann so ausgestaltet sein, dass auch der obere Abschnitt auf den dritten Gehäuseabschnitt aufsetzbar ist, wenn der obere von dem unteren Abschnitt gelöst ist. In dieser Ausgestaltungsform ist es prinzipiell möglich, die Nachvergütungsstation auch als gesonderte Einheit zu betreiben, falls in bestimmte Situationen ein gesonderter Betrieb vorteilhaft ist.

Die Erfindung wird im Folgenden anhand von Ausführungsbeispielen in den Zeichnungen beschrieben, in denen:
Fig. 1 und 2 schematische Querschnittsansichten einer Nachvergütungsstation für eine in Fig. 3 gezeigte Nachbearbeitungsanordnung zeigen,
Fig. 3 eine schematische Querschnittsansicht einer Ausführungsform der Nachbearbeitungsanordnung zeigt,
Fig. 4 eine Querschnittsansicht der Nachbearbeitungsanordnung aus Fig. 3 zeigt, wobei voneinander lösbare Teile des Gehäuses voneinander gelöst sind,
Fig. 5a bis 5c Querschnittsansichten der Nachbearbeitungsanordnung in drei aufeinanderfolgenden Zuständen im Verlaufe eines Nachbearbeitungsvorgangs zeigen und
Fig. 6a bis 6c schematische Querschnittsansichten von drei weiteren, den Zuständen aus Fig. 5a bis 5c nachfolgenden Zuständen im Verlaufe des Nachbearbeitungsvorgangs zeigen.

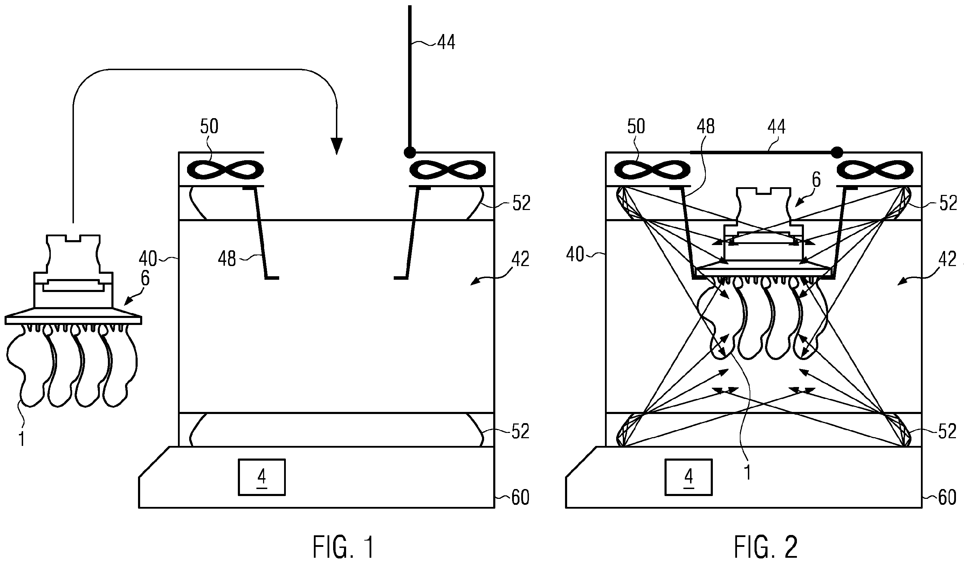

In den Fig. 1 und 2 ist eine Nachvergütungsstation 42 zunächst zur Erläuterung gelöst von einer Reinigungsstation einer Nachbearbeitungsanordnung gezeigt, um Aufbau und Funktion der Nachvergütungsstation zu illustrieren. Die Nachvergütungsstation 42 weist einen zylindrischen oberen Gehäuseabschnitt 40 auf, in dem nahe dem oberen und dem unteren Ende umlaufende Reflektoren 52 angebracht sind, die Licht von um den Umfang herum verteilt angeordneten Lichtquellen (nicht gezeigt) in ein Belichtungsgebiet reflektieren. Durch die Form der Reflektoren 52 wird das Licht entlang einer zentralen Achse und darum herum über einen größeren Bereich verteilt reflektiert. Die von den Reflektoren 52 reflektierten Lichtstrahlen der Lichtquellen sind in Fig. 2 jeweils durch eine Schar von Pfeilen angedeutet. Es können mehrere Arten von Lichtquellen mit verschiedenen Emissionsmaxima um den Umfang herum verteilt sein, so dass Belichtungen mit gewünschten Wellenlängen durchgeführt werden können.

Links in Fig. 1 sind schematisch Formkörper 1, hier in Form von Dentalprothesen-Basen, dargestellt, die nach ihrem stereolithographischen Aufbau noch an einer Bauplattform 6 hängen. Die Bauplattform 6 ist nach Beendigung des Bauvorgangs aus einem Stereolithographie-3D-Drucker entnommen worden. Die Bauplattform 6 wird mit den daran hängenden Formkörpern 1 durch eine mit einer Klappe 44 versehene Öffnung in der Außenwand des oberen Abschnitts 40 des Gehäuses in das Innere der Nachvergütungsstation 42 eingebracht, wie schematisch durch den Pfeil in Fig. 1 angedeutet, und im Inneren in einer Halterung 48 eingehängt. Die Halterung 48 kann z.B. eine Mehrzahl von ins Innere der Nachvergütungsstation ragenden Streben aufweisen, die an ihrem im Innenraum der Nachvergütungsstation liegenden Ende einen abgewinkelten, horizontalen Endabschnitt haben, mit dem sie jeweils unter die Bauplattform 6 greifen können, so dass diese darauf aufliegt. Die Streben der Halterung 48 können elastisch sein, um so Bauplattformen über einen gewissen Größenbereich in einer derartigen Halterung 48 aufhängen zu können.

Nachdem die Formkörper 1 mit der Bauplattform 6 an der Halterung 48 aufgehängt sind, könnte im Prinzip bereits die Belichtung der Formkörper 1 zu ihrer Nachvergütung, wie in Fig. 2 gezeigt, durchgeführt werden. In einer Nachbearbeitungsanordnung gemäß der Erfindung wird jedoch nach Beladen der Nachvergütungsstation 42 mit der Bauplattform 6 inklusive Formkörper 1 zunächst ein Reinigungsvorgang durchgeführt, der weiter unten beschrieben wird.

Die Nachvergütungsstation 42 ist mit schematisch dargestellten Lüftern 50 versehen, die die Formkörper nach der Reinigung durch einen von ihnen erzeugten Luftstrom trocknen und die Nachvergütungsstation 42 während der Nachbelichtung kühlen. Zudem wird durch die Lüfter 50 gewährleistet, dass Lösungsmitteldämpfe aus der Nachvergütungsstation abgeführt werden, um eine mögliche Entzündung während der Nachbelichtung zu vermeiden.

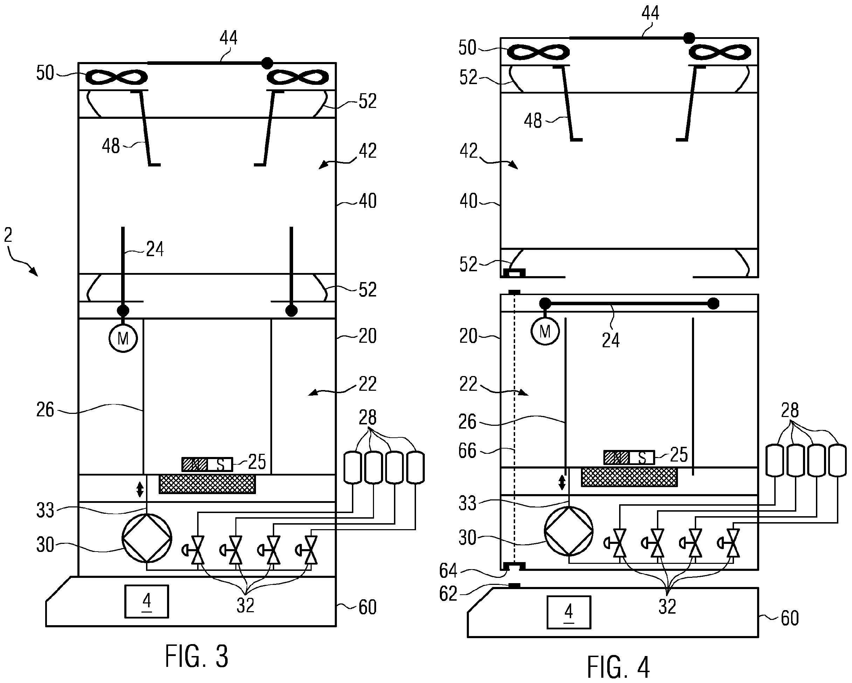

In den Fig. 1 und 2 ist der obere Gehäuseabschnitt 40 auf einen dritten Gehäuseabschnitt 60 aufgesetzt gezeigt, in dem eine Steuereinrichtung 4 zur Steuerung der verschiedenen Komponenten der Nachbearbeitungsanordnung untergebracht ist. In dieser Konfiguration aus Fig. 1 und 2 kann die Nachvergütungsstation 42 auch separat betrieben werden. In Fig. 4 ist eine elektrische Verbindung durch eine gestrichelte Leitung 66 innerhalb der Reinigungsstation 22 angedeutet, die die Verbindung der Nachvergütungsstation mit der Steuereinrichtung 4 andeutet, wenn alle Gehäuseabschnitte übereinander angeordnet und miteinander verbunden sind.

In Fig. 3 ist die Nachbearbeitungsanordnung mit einem Gehäuse 2 im zusammengesetzten Zustand als schematischer Querschnitt dargestellt. Die Reinigungsstation 22 ist in einem unteren Abschnitt 20 des Gehäuses 2 untergebracht. Die obere Wand des unteren Gehäuseabschnitts 20 ist mit einer Öffnung mit einem Verschluss 24 versehen, der in Fig. 3 im geöffneten Zustand gezeigt ist. Der Verschluss 24 kann über einen schematischen angedeuteten Motor M, der von der Steuereinrichtung 4 gesteuert wird, geöffnet und geschlossen werden. Auch kann der Verschluss passiv durch das Anheben der Reinigungswannne aufgestossen werden. In der Bodenwand des oberen Abschnitts 40 des Gehäuses 2 befindet sich eine mit der Öffnung mit dem Verschluss 24 fluchtende Öffnung, sodass nach Öffnen des Verschlusses 24 ein Durchgang aus dem Innenraum des unteren Abschnitts 20 in den Innenraum des oberen Abschnitts 40 geöffnet ist.

In der Reinigungsstation 22 im unteren Gehäuseabschnitt 20 befindet sich eine oben offene Reinigungswanne 26, wenn diese sich in einer Bereithaltungsstellung befindet. Die Reinigungsstation 22 umfasst weiter eine Pumpe 30 und eine Reihe von damit in Verbindung stehenden Ventilen 32. An die Ventile 32 sind externe Behälter 28 mit Reinigungsflüssigkeiten angeschlossen. Die Pumpe 30 ist über eine nur schematisch als Linie angedeutete Leitung 33 mit der Reinigungswanne 26 verbunden.

Die Reinigungswanne 26 ist ferner mit einem Magnetrührer 25 versehen, der, wenn Reinigungsflüssigkeit in die Reinigungswanne 26 eingefüllt ist, die Reinigungsflüssigkeit in Bewegung versetzt, um den Reinigungsvorgang zu intensivieren. Alternativ oder zusätzlich zum Magnetrührer kann auch ein Ultraschallaktuator an der Unterseite des Reinigungswannenbodens oder einer der Seitenwände der Reinigungswanne angeordnet sein.

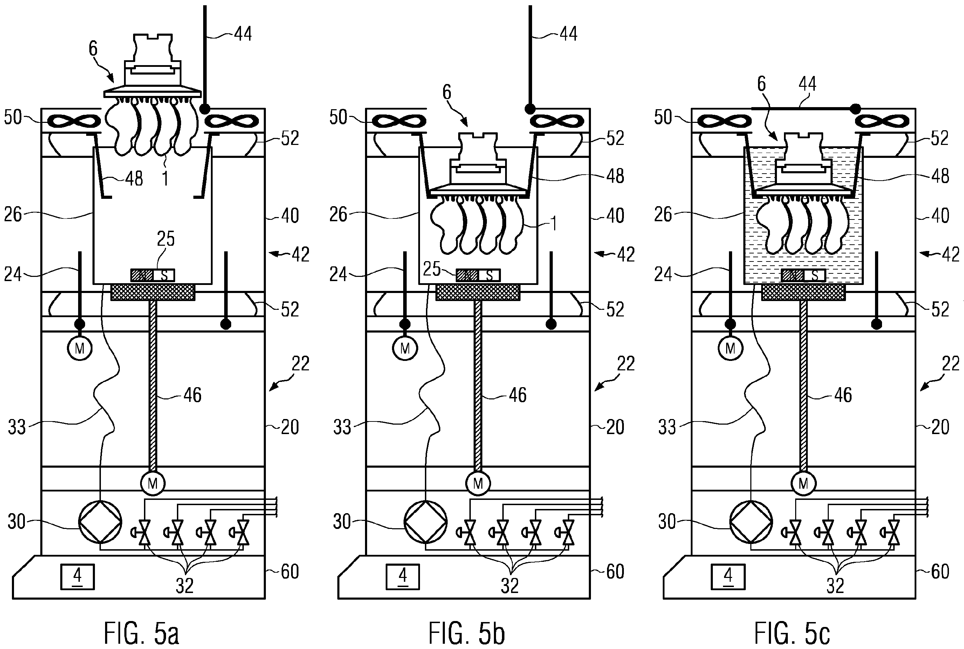

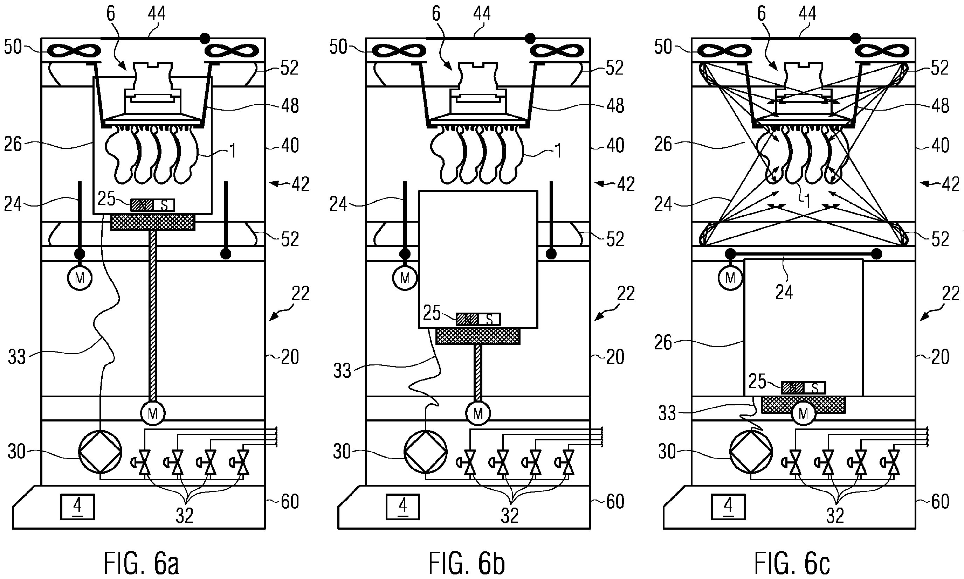

Die Reinigungsstation 22 ist ferner mit einer Hubeinrichtung 46 versehen, die in Fig. 5a bis 5c und 6a und 6b durch einen schematisch angedeuteten Motor und eine Spindel illustriert ist. Die Hubeinrichtung 46 kann durch einen Spindelmechanismus realisiert werden. Alternativ kann eine Zahnstange an einer Innenwand des unteren Gehäuseabschnitts 20 angeordnet sein in das ein von einem Motor angetriebenes Zahnrad eingreift, wobei der Motor auch die Reinigungswanne 26 trägt und diese so aus dem unteren Abschnitt 20 des Gehäuses aus der Bereithaltungsstellung vertikal nach oben in die Nachbearbeitungsstation 42 in eine Reinigungsstellung anheben und anschließend wieder in die Bereithaltungsstellung in der Reinigungsstation 22 nach unten absenken kann. In der Reinigungsstellung sind die an der Halterung 48 aufgehängten Formkörper von den Seitenwänden der Reinigungswanne umfasst, d.h. der obere Rand der Seitenwände der Reinigungswanne 26 liegt vertikal oberhalb der Formkörper 1, sodass nach Befüllung der Reinigungswanne 26 mit Reinigungsflüssigkeit die Formkörper 1 vollständig in Reinigungsflüssigkeit eingetaucht sind.

Grundsätzlich können beim Hubmechanismus auch Teleskopstangen mit einer Mehrzahl von ineinander greifenden Teleskopelementen zum Einsatz kommen, die die Reinigungswanne 26 tragen und die längenverstellbar sind, um die Reinigungswanne 26 aus der Bereithaltungsstellung in der Reinigungsstation 22 in die Reinigungsstellung in der Nachvergütungsstation 42 anheben und wieder absenken zu können. Alternativ können dazu auch Scherenhubmechanismen dienen.

In Fig. 4 ist der modulare Aufbau des Gehäuses der Nachbearbeitungsanordnung illustriert: Der obere Abschnitt 40, der untere Abschnitt 20 und der dritte Abschnitt sind hier voneinander gelöst dargestellt. Die Abschnitte können durch nicht weiter dargestellte Steckverbindungsstrukturen miteinander verbunden werden. Am dritten Abschnitt 60 ist ein Kontakt 62 schematisch angedeutet, der in Kontakt mit einem Kontakt 64 am unteren Abschnitt 20 kommt, wenn der dritte Abschnitt 60 und der untere Abschnitt 20 zusammengesteckt werden. Tatsächlich können die Kontakte 62, 64 mehrere separate Kontakte haben, damit neben elektrischer Energieversorgung auch eine oder mehrere parallele Datenleitungen oder ein Datenbus in Verbindung miteinander gesetzt werden können. Die gestrichelte Linie 66 deutet Verbindungsleitungen an, die von dem Kontakt 64 durch den unteren Abschnitt zu einem Kontakt am oberen Ende des unteren Abschnitts 20 führen, der dann wiederum in Verbindung mit einem Kontakt am unteren Ende des oberen Abschnitts kommt. Auf diese Weise können die unteren und oberen Abschnitte 20, 40 mit elektrischer Energie versorgt werden und Daten mit der Steuereinrichtung 4 austauschen, wenn letztere den Betrieb der Reinigungsstation und der Nachvergütungsstation steuert, wie im folgenden an einem Beispiel beschrieben wird.

Es wird nun ein Ausführungsbeispiel beschrieben, wie die Steuereinrichtung 4 die verschiedenen Komponenten zur Durchführung der Nachbearbeitung steuern kann, wobei zunächst auf die Fig. 5a bis 5c Bezug genommen wird. In Fig. 5a ist die Klappe 44 an der Oberseite der Nachvergütungsstation 42 geöffnet. Eine Bauplattform 6 mit daran hängenden Formkörpern 1 wird durch die Öffnung der Klappe 44 von oben in die Nachvergütungsstation 42 eingeführt und in den Innenraum abgesenkt, bis äußere Randbereiche der Bauplattform 6 in Auflage an der Halterung 48 kommen, so dass die Bauplattform 6 in die Halterung 48 eingehängt ist. Der Beginn dieses Vorgangs ist in Fig. 5a dargestellt, und der eingehängte Zustand der Bauplattform 6 mit den Formkörpern 1 in der Halterung 48 in Fig. 5b. In Fig. 5a und 5b ist die Reinigungswanne durch die Hubeinrichtung 46 bereits in die angehobene Reinigungsstellung gefahren, in der sich die Reinigungswanne 26 im Innenraum der Nachvergütungsstation 42 befindet. In dieser Reinigungsstellung der Reinigungswanne 26 umfasst die Reinigungswanne 26 die Formkörper 1, d.h. die Formkörper 1 liegen unterhalb des oberen Randes der Reinigungswanne 26. Um nach dem Einsetzen der Bauplattform 6 in die Halterung 48 und nach Schließen der Klappe 44 den Reinigungsvorgang durchzuführen, steuert die Steuereinrichtung 4 die Pumpe 30 und die Ventile 32, um eine ausgewählte Reinigungsflüssigkeit durch die Leitung 33 in die Reinigungswanne 26 zu pumpen. Die Reinigungswanne 26 ist in Fig. 5c in vollständig gefülltem Zustand dargestellt.

Die Leitung 33 ist in Fig. 5a bis 5c als flexible Leitung vereinfacht durch einen gekrümmt verlaufenden Strich dargestellt; die Länge der Leitung 33 ist ausreichend, so dass ihr an die Reinigungsräume 26 angeschlossenes Ende der Bewegung der Reinigungswanne 26 in die in die Nachvergütungsstation 42 angehobenen Reinigungsstellung folgen kann. Die flexible Leitung 32 zur Zufuhr der Reinigungsflüssigkeit kann zum Beispiel spiralförmig verlegt sein, um sich entsprechend in der Länge ausdehnen zu können, während die Reinigungswanne 26 aus der Bereithaltungsstellung in die in den Fig. 5a bis 5c gezeigte Reinigungsstellung angehoben wird. In Fig. 5a bis 5c beginnt die Füllung der Reinigungswanne 26 mit Reinigungsflüssigkeit erst, wenn sich die Reinigungswanne 26 bereits in der angehobenen Reinigungsstellung befindet. Grundsätzlich sind auch Ausführungsformen möglich, bei denen die Füllung der Reinigungswanne 26 durch Betrieb der Pumpe 30 bereits zeitgleich mit dem Hubvorgang beginnt, so dass die Reinigungswanne 26 bereits teilweise oder ganz gefüllt sein kann, wenn sie die angehobene Reinigungsstellung erreicht. Es ist auch denkbar, dass der Hubvorgang zum Anheben der Reinigungswanne 26 durch die Hubeinrichtung 46 in die angehobene Reinigungsstellung erst beginnt, nachdem die Bauplattform mit den Formkörpern 1 in die Halterung 48 eingehängt ist.

Nach Abschluss eines Reinigungsschrittes pumpt die Pumpe 30 die Reinigungsflüssigkeit wieder aus der Reinigungswanne 26 ab, wobei die Reinigungsflüssigkeit dabei in der Regel in denjenigen Behälter 28 (siehe Fig. 3 und 4) zurückgepumpt wird, aus dem sie zuvor in die Reinigungswanne gepumpt worden ist. Dadurch kann die Reinigungsflüssigkeit wiederverwendet werden. In den Behältern 28 können Reinigungsflüssigkeiten verschiedener Art oder verschiedener Reinheit vorhanden sein, so dass aufeinanderfolgende Reinigungsschritte mit verschiedenen Reinigungsflüssigkeiten durch sukzessives Zupumpen der Reinigungsflüssigkeiten aus bestimmten Behältern 28 durchgeführt werden können. Beispielsweise kann zunächst eine Grobreinigung mit einer ersten Reinigungsflüssigkeit aus einem ersten der Behälter 28 durchgeführt werden und nach dem Abpumpen der Reinigungsflüssigkeit zur Grobreinigung eine Reinigungsflüssigkeit höherer Reinheit aus einem anderen der Behälter 28 in die Reinigungswanne gepumpt werden, um eine Nachreinigung durchzuführen.

In Fig. 6a ist nach Abschluss des letzten Reinigungsschritts die zuletzt verwendete Reinigungsflüssigkeit bereits wieder aus der Reinigungswanne 26 abgepumpt. Danach steuert die Steuereinrichtung 4 den Betrieb der Nachbearbeitungsanordnung weiter, indem sie die Hubeinrichtung 46 betätigt, um die Reinigungswanne aus der angehobenen Reinigungsstellung aus Fig. 6a vertikal nach unten abzusenken, wobei in Fig. 6b ein Zwischenzeitpunkt während des Absenkvorgangs dargestellt ist, in dem die Reinigungswanne bereits teilweise in die Reinigungsstation 22 abgesenkt ist. Wenn die Reinigungswanne 26 vollständig in die Reinigungsstation 22 im unteren Abschnitt 20 des Gehäuses abgesenkt ist, wie in Fig. 6c gezeigt, stoppt die Steuereinrichtung 4 den Betrieb der Hubeinrichtung 46 und schließt den Verschluss 24, so dass der Innenraum der Nachvergütungsstation 42 nun gegenüber dem Innenraum der Reinigungsstation 22 abgeschlossen ist. Danach kann die Steuereinrichtung 4 die Lüfter 50 aktivieren, um die Formkörper 1, die noch von Reinigungsflüssigkeit benetzt sein können, zu trocknen.

Anschließend kann die Steuereinrichtung die Nachbelichtung durchführen, wie in Fig. 6c dargestellt ist. Dazu betreibt die Steuereinrichtung 4 die von einem ausgewählten Betriebsprogramm vorgegebenen Lichtquellen mit jeweils vorgegebener Intensität über eine ebenfalls von dem Betriebsprogramm vorgegebene Belichtungsdauer, um noch nicht vollständig ausgehärtete Zonen der Formkörper voll auszupolymerisieren. Nach Abschluss der Nachbelichtung kann schließlich die Klappe 44 des oberen Gehäuseabschnitts 40 geöffnet, die Bauplattform 6 mit den Formkörpern 1 daran aus der Halterung 48 angehoben und aus der Nachvergütungsstation 42 entnommen werden, womit die Nachbearbeitung der Formkörper 1 abgeschlossen ist.

Zwischen dem Einbringen der nachzubearbeitenden Formkörpern in die Nachbearbeitungsanordnung in Fig. 5a und der Entnahme der Formkörper 1 daraus wie soeben beschrieben, können alle zuvor beschriebenen Nachbearbeitungsschritte automatisch und gesteuert durch die Steuereinrichtung 4, die ein ausgewähltes gespeichertes Betriebsprogramm ablaufen lässt, durchgeführt werden. Dadurch ist die Nachbearbeitung weniger personalintensiv und es bestehen keine Risiken, dass einzelne Schritte durch das Personal falsch oder ungenügend durchgeführt werden, da die Schritte nach vorgegebenen Programmen ablaufen.

Alternativ zur Trocknung durch die Lüfter 50 kann in einer nicht dargestellten Ausführungsform in der Nachbearbeitungsanordnung eine von der Steuereinrichtung 4 gesteuerte Druckluftquelle vorhanden sein, die nach Abschluss des Reinigungsvorgangs der Formkörper 1 Druckluft aus der Druckluftquelle über Düsen auf die Formkörper 1 richtet, um noch anhaftende Reinigungsflüssigkeit mittels Druckluft abzublasen und so den Reinigungs- und Trocknungsprozess der Formkörper zu verbessern. In einer bevorzugten Ausführungsform können Luftdüsen vorhanden sein, die als Luftmesser (Air Knife) ausgebildet sind, d.h. die Düsenöffnung ist als länglicher Düsenspalt geformt, der z.B. ringförmig um die Formkörper 1, wenn diese an der Halterung 48 eingehängt sind, verläuft, um Druckluft aus allen Richtungen auf die Formkörper 1 zu richten, um diese besonders effektiv von restlicher Reinigungsflüssigkeit zu befreien und zu trocknen.

In einer weiteren Ausführungsform kann die Halterung 48 drehbar um eine vertikale Achse in der Nachbearbeitungsstation gelagert sein, und eine Motor vorhanden sein, der die Halterung mit den darin eingehängten Formkörpern 1 in Rotation versetzen kann, um überschüssiges, anhaftendes Reinigungsmittel abzuschleudern, anstatt durch Abblasen zu entfernen. In einer solchen Ausführungsform können die Formkörper 1 auch, z.B. wenn sie sich in dem in Fig. 5b gezeigten Zustand vor Beginn der Reinigung befinden, in schnelle Rotation versetzt werden, um noch vom Bauvorgang anhaftendes, nicht-polymerisiertes Baumaterial abzuschleudern, bevor die weitere Reinigung mit Reinigungsflüssigkeit erfolgt.

Die Drehung der Halterung um eine vertikale Achse kann auch in dem in Fig. 5c dargestellten Zustand dazu verwendet werden, um die Formkörper 1 in der Reinigungsflüssigkeit in der Reinigungswanne 26 zu drehen, um durch die Relativbewegung zu der Reinigungsflüssigkeit die Reinigungswirkung zu intensivieren, wobei eine solche Drehung in der Reinigungsflüssigkeit mit geringer Drehzahl durchzuführen ist, als eine etwaige Rotation der Formkörper 1 in Luft zum Abschleudern von anhaftender Flüssigkeit.

Die Art und Weise der durchzuführenden Reinigung und die Art und Weise der durchzuführenden Nachbelichtung kann von Eigenschaften der nachzubearbeitenden Formkörper abhängen. Beispielsweise kann sowohl die Auswahl der Wellenlängen und der Intensitäten der durchzuführenden Nachbelichtung von der Größe, der Form und der Materialart des Formkörpers und der Art der Photomonomere abhängen, der zur Herstellung des Formkörpers verwendet worden ist. Ebenso können die vorzunehmenden Reinigungsschritte von Eigenschaften des im konkreten Fall nachzubearbeitenden Formkörpers abhängen. Aus diesen Gründen ist die Steuereinrichtung der Nachbearbeitungsanordnung vorteilhaft mit einer Aufnahmeeinrichtung zur Aufnahme von Informationen über die Eigenschaften des nachzubearbeitenden Formkörpers verbunden. Die Aufnahmeeinrichtung kann Teil der Nachbearbeitungsanordnung sein und kann mit der Steuereinrichtung verbunden sein. Ferner ist die Steuereinrichtung mit einer Anzahl von gespeicherten Betriebsprogrammen für die Reinigungsstation und die Nachvergütungsstation sowie mit einer Zuordnungsvorschrift versehen, die Information über die Eigenschaften des Formkörpers mit einem nach Maßgabe der Informationen zu den Eigenschaften des Formkörpers passenden Betriebsprogramm verknüpft. Auch können die von der Aufnahmeeinrichtung aufgenommenen Informationen über die Eigenschaften des Formkörpers von der Steuereinrichtung verwendet werden, um anhand er Zuordnungsvorschrift das oder mehrere geeignete Betriebsprogramme aufzurufen und in der gewünschten Weise ablaufen zu lassen, wobei dieser Betrieb der Nachbearbeitungsanordnung nach Maßgabe dieses oder dieser Betriebsprogramme dann vollkommen automatisch abläuft, ohne dass Personal eingreifen muss.

Die Aufnahmeeinrichtung für die Information über die Eigenschaften des Formkörpers kann eine manuelle Eingabeeinrichtung zur manuellen Eingabe der Informationen des nachzubearbeitenden Formkörpers durch einen Benutzer sein, z.B. eine Tastatur oder ein Touch-Screen. Alternativ kann eine automatische Leseeinrichtung als Aufnahmeeinrichtung dienen, die zum Lesen eines mit dem Formkörper verbundenen oder ihm zugeordneten Datenträger mit den Informationen zu den Eigenschaften des Formkörpers eingerichtet ist. Beispielsweise kann ein Datenträger in Form eines Strichcodes oder DataMatrix-Codes an der von den Formkörpern 1 abgewandten Oberseite der Bauplattform 6 angebracht sein oder Teil des Formkörpers selbst sein und Informationen über die aufgebauten und daran hängenden Formkörper 1 enthalten. Dieser kann von einem Code-Lesegerät als Aufnahmeeinrichtung ausgelesen werden, um die Informationen zu den Formkörpern 1 an die Steuereinrichtung 4 weiterzuleiten, die dann über eine gespeicherte Zuordnungsvorschrift nach Maßgabe der aufgenommenen Informationen eines oder mehrere Betriebsprogramme für die Nachbearbeitungsanordnung auswählt und ablaufen lässt. Die gesamte Nachbearbeitung kann so voll automatisch in einer kompakten Nachbearbeitungsanordnung durchgeführt werden, ohne dass, außer dem Einsetzen der Formkörper und deren Entnahme nach der Nachbearbeitung, in irgendeiner Weise eingreifen muss. Ferner besteht für das Bedienungspersonal kein Risiko mit Reinigungsflüssigkeiten oder dergleichen in Berührung zu kommen.

## Patentansprüche

1. Nachbearbeitungsanordnung für generativ durch Photopolymerisation aufgebaute Formkörper, die eine Reinigungsstation zur Bereithaltung einer Reinigungswanne für den Formkörper und eine Nachvergütungsstation zur Nachbelichtung des Formkörpers aufweist, **dadurch gekennzeichnet, dass** die Reinigungsstation (22) und die Nachvergütungsstation (42) in einem auf einer horizontalen Standfläche standfähigen Gehäuse (2) untergebracht sind, in dem in einem unteren Abschnitt (20) die Reinigungsstation (22) und in einem vertikal darüber liegenden oberen Abschnitt (40) die Nachvergütungsstation (42) untergebracht sind, wobei die unteren und oberen Abschnitte (20, 40) durch einen Durchgang miteinander in Verbindung stehen, dass in der Nachvergütungsstation (42) eine Halterung (48) angebracht ist, an der der Formkörper (1) direkt oder indirekt in einer zur Nachbelichtung geeigneten Position aufhängbar ist, dass die Reinigungswanne (26) von einer Hubeinrichtung (46) getragen ist, die dazu ausgestaltet ist, um die Reinigungswanne (26) aus einer Bereithaltungsstellung in der Reinigungsstation (22) vertikal durch den Durchgang in die Nachvergütungsstation (42) in eine Reinigungsstellung anheben zu können, in der der an der Halterung (48) aufgehängte Formkörper (1) von der Reinigungswanne aufgenommen ist, und wieder absenken zu können, dass eine Steuereinrichtung (4) dazu eingerichtet ist, den Betrieb der Hubeinrichtung und der Reinigungs- und der Nachvergütungsstationen (22, 42) so zu steuern, dass nach Positionieren des Formkörpers (1) an der Halterung (48) die Hubeinrichtung (46) die Reinigungswanne (26) in die Reinigungsstellung anhebt, um den Formkörper (1) durch Reinigungsflüssigkeit in der Reinigungswanne zu reinigen, nach Abschluss des Reinigungsvorgangs die Reinigungswanne (26) durch die Hubeinrichtung (46) nach unten in die Bereithaltungsstellung in der Reinigungsstation zu verfahren und dann den Betrieb der Nachvergütungsstation (42) zur Nachbelichtung zu steuern.

2. Nachbearbeitungsanordnung nach Anspruch 1, **dadurch gekennzeichnet, dass** der Durchgang entweder (i) mit einem Verschluss (24) versehen ist, der von der Steuereinrichtung geöffnet und geschlossen werden kann, wobei in diesem Fall die Steuereinrichtung dazu eingerichtet ist, den Verschluss (24) zu öffnen, bevor die Reinigungswanne (26) von der Hubeinrichtung angehoben den Durchgang passiert, und den Verschluss (24) zu schließen, nachdem nach Abschluss des Reinigungsvorgangs die Reinigungswanne (26) durch die Hubeinrichtung (46) nach unten in die Reinigungsstation verbracht ist, oder (ii) mit einem Verschluss versehen ist, der durch das Anheben der Reinigungswanne (26) passiv geöffnet wird und sich nach dem Absenken der Reinigungswanne (26) passiv wieder schließt.

3. Nachbearbeitungsanordnung nach Anspruch 1 oder 2, **dadurch gekennzeichnet, dass** die Halterung (48) um eine vertikale Achse drehbar gelagert ist und dass ein Motor vorhanden ist, der auf die Halterung (48) einwirkt, um diese mit dem daran aufgehängten Formkörper in Rotation zu versetzen, um den Formkörper durch Abschleudern von noch anhaftender photopolymerisierbarer Flüssigkeit zu reinigen.

4. Nachbearbeitungsanordnung nach einem der vorhergehenden Ansprüche, **dadurch gekennzeichnet, dass** die Reinigungsstation (22) mit einer Fördervorrichtung (30, 32) versehen ist, die mit wenigstens einem Behälter (28) für Reinigungsflüssigkeit verbunden ist, wobei die Fördervorrichtung über eine flexible Leitung (33) weiterhin mit der Reinigungswanne (26) verbunden ist, wobei die flexible Leitung (33) eine ausreichende Länge hat, um von der Fördervorrichtung bis zur Reinigungswanne (26) in der Reinigungsstellung zu reichen, und dass die Steuereinrichtung (4) dazu eingerichtet ist, den Betrieb der Fördervorrichtung so zu steuern, dass die Reinigungswanne (26) während sie durch die Hubeinrichtung (46) in die Reinigungsstellung angehoben wird und/oder nachdem sie durch die Hubeinrichtung (46) in die Reinigungsstellung angehoben ist mit Reinigungsflüssigkeit zu füllen und den Betrieb der Reinigungsstation beim Reinigungsvorgang zu steuern.

5. Nachbearbeitungsanordnung nach Anspruch 3 oder 4, **dadurch gekennzeichnet, dass** die Steuereinrichtung (4) weiterhin dazu eingerichtet ist, bei der Durchführung des Reinigungsvorgangs den mit der Halterung (48) verbundenen Motor zu aktivieren und dadurch den Formkörper (1) in der Reinigungsflüssigkeit in Drehung zu versetzen, um die Reinigungswirkung zu intensivieren.

6. Nachbearbeitungsanordnung nach Anspruch 4 oder 5, **dadurch gekennzeichnet, dass** die Reinigungsstation (22) mit wenigstens zwei Behältern (28) mit Reinigungsflüssigkeiten verbunden ist und die Fördervorrichtung mit einer Pumpe (30) und Ventilen (32) versehen ist, die unter Steuerung der Steuereinrichtung selektiv Reinigungsflüssigkeit aus einem ausgewählten der wenigstens zwei Behälter (28) in die Reinigungswanne (26) fördern und nach Abschluss des Reinigungsvorgangs aus der Reinigungswanne (26) abpumpen.

7. Nachbearbeitungsanordnung nach einem der vorhergehenden Ansprüche, **dadurch gekennzeichnet, dass** die Nachvergütungsstation (42) mit wenigstens zwei Lichtquellen zur Nachbelichtung mit unterschiedlichen Wellenlängen versehen ist, wobei die unterschieldichen Wellenlängen im Bereich zwischen 300 nm und 500 nm liegen.

8. Nachbearbeitungsanordnung nach einem der vorhergehenden Ansprüche, **dadurch gekennzeichnet, dass** die Steuereinrichtung (4) mit einer Aufnahmeeinrichtung zur Aufnahme von Informationen über die Eigenschaften des nachzubearbeitenden Formkörpers verbunden ist und mit einem Speicher versehen ist, in dem eine Anzahl von Betriebsprogrammen für die Reinigungsstation (22) und die Nachvergütungsstation (42) und eine Zuordnungsvorschrift gespeichert sind, die Betriebsprogramme nach Maßgabe der Informationen zu den Eigenschaften des Formkörpers zuordnet, und dass die Steuereinrichtung (4) dazu eingerichtet ist, nach Aufnahme der Information über die Eigenschaften des Formkörpers die zugeordneten Betriebsprogramme aufzurufen und ablaufen zu lassen und die Reinigungsstation (22) und die Nachvergütungsstation (42) nach Maßgabe der aufgerufenen Betriebsprogramme zu steuern.

9. Nachbearbeitungsanordnung nach Anspruch 8, **dadurch gekennzeichnet, dass** die Aufnahmeeinrichtung eine manuelle Eingabeeinrichtung zur manuellen Eingabe von Informationen über die Eigenschaften des Formkörpers durch einen Benutzer ist.

10. Nachbearbeitungsanordnung nach Anspruch 8, **dadurch gekennzeichnet, dass** die Aufnahmeeinrichtung eine automatische Leseeinrichtung umfasst, die zum Lesen eines mit dem Formkörper verbundenen oder ihm zugeordneten Datenträgers mit Informationen zu den Eigenschaften des Formkörpers ausgestaltet ist.

11. Nachbearbeitungsanordnung nach einem der vorhergehenden Ansprüche, **dadurch gekennzeichnet, dass** die Halterung (48) zum Einhängen des Formkörpers (1) so ausgestaltet ist, dass der Formkörper (1) so davon herab hängend gehalten wird, dass er wenigstens aus der gesamten unteren Hemisphäre für die Strahlung der Nachvergütungsstation und die Reinigungsflüssigkeit der Reinigungswanne (26) während des Reinigungsvorgangs frei zugänglich ist.

12. Nachbearbeitungsanordnung nach Anspruch 11, **dadurch gekennzeichnet, dass** die Halterung (48) dazu ausgestaltet ist, eine Bauplattform (6) mit einem oder mehreren daran anhaftenden Formkörpern (1) an der Halterung (48) aufzuhängen oder einzulegen, wobei der oder die Formkörper (1) nach unten weisend an der Bauplattform (6) hängt oder hängen.

13. Nachbearbeitungsanordnung nach einem der vorhergehenden Ansprüche, **dadurch gekennzeichnet, dass** der obere Abschnitt (40) des Gehäuses, in dem die Nachvergütungsstation (42) untergebracht ist, in seiner Außenwand eine zu öffnende Klappe (44) aufweist, die bei Öffnung Zugang zu dem Innenraum der Nachvergütungsstation (42) zum Aufhängen eines nachzubearbeitenden Formkörpers (1) an der Halterung (48) und zur Entnahme eines nachbearbeiteten Formkörpers daraus ermöglicht.

14. Nachbearbeitungsanordnung nach einem der vorhergehenden Ansprüche, **dadurch gekennzeichnet, dass** der obere Abschnitt (40) und der untere Abschnitt (20) des Gehäuses lösbar miteinander verbunden sind.

15. Nachbearbeitungsanordnung nach einem der Ansprüche 2 bis 14, **dadurch gekennzeichnet, dass** der obere Abschnitt (40) in seiner Bodenwand eine Öffnung hat und der untere Abschnitt (20) in seiner Oberwand eine mit der Öffnung der Unterwand fluchtende Öffnung hat, wobei die Öffnungen zusammen den Durchgang bilden und der Verschluss (24) zum selektiven Öffnen und Schließen des Durchgangs an der Öffnung in der Unterwand des oberen Abschnitts (40) oder an der Öffnung in der Oberwand des unteren Abschnitts (20) angeordnet ist.

16. Nachbearbeitungsanordnung nach Anspruch 14 oder 15, **dadurch gekennzeichnet, dass** die Steuereinrichtung (4) in einem lösbaren dritten Abschnitt (60) des Gehäuses (2) untergebracht ist, wobei der untere Abschnitt (20) und der dritte Abschnitt des Gehäuses so ausgestaltet sind, dass der dritte Abschnitt unter dem unteren Abschnitt (20) an diesem anbringbar ist, so dass der untere und der obere Abschnitt (20, 40) von dem dritten Abschnitt (60) getragen werden, und eine elektrische Verbindung zwischen der Steuereinrichtung (4) im dritten Abschnitt und den unteren und oberen Abschnitten (20, 40) vorhanden ist.

## Claims

1. Post-processing arrangement for shaped bodies manufactured additively by photopolymerization, which post-processing arrangement has a cleaning station for holding ready a cleaning basin for the shaped body, and a finishing station for post-exposure of the shaped body, **characterized in that** the cleaning station (22) and the finishing station (42) are housed in a housing (2) capable of standing on a horizontal stand surface, in which housing the cleaning station (22) is housed in a lower section (20) and the finishing station (42) is housed in an upper section (40) lying vertically on top of the lower section, wherein the lower and upper sections (20, 40) are connected to each other by a passage, **in that** a holder (48) is mounted in the finishing station (42), on which holder the shaped body (1) can be suspended directly or indirectly in a position suitable for post-processing, **in that** the cleaning basin (26) is carried by a lifting apparatus (46) which is configured to be capable of lifting the cleaning basin (26) from a holding position in the cleaning station (22) vertically upwards through the passage into the finishing station (42) to a cleaning position in which the shaped body suspended on the holder (48) is received in the cleaning basin, and of lowering the cleaning basin again, **in that** a control unit (4) is arranged to control the operation of the lifting apparatus and the cleaning and finishing stations (22, 42) in such a manner that after positioning the shaped body on the holder (48) the lifting apparatus (46) lifts the cleaning basin (26) to the cleaning position in order to clean the shaped body (1) with cleaning liquid in the cleaning basin, and, after completion of the cleaning process, to move the cleaning basin (26) by the lifting apparatus (46) downwardly to the holding position in the cleaning station, and to control the operation of the finishing station (42) thereafter for post-exposure.

2. Post-processing arrangement according to claim 1, **characterized in that** the passage is either (i) provided with a closure (24) adapted to be opened and closed by the control unit controlling an actuator, wherein in this case the control unit is arranged to open the closure (24) before the cleaning basin (26) is lifted by the lifting apparatus and passes the passage, and to close the closure (24) after the cleaning basin (26) is moved by the lifting apparatus (46) downwardly into the cleaning station after completion of the cleaning process, or (ii) is provided with a closure which is passively opened by the cleaning basin (26) when it is lifted up, and which is passively closed after lowering the cleaning basin (26) again.

3. Post-processing arrangement according to claim 1 or 2, **characterized in that** the holder (48) is mounted to be rotatable about a vertical axis, and that a motor is provided which drives the holder (48) in order to set the holder with the shaped body suspended thereon in rotation in order to clean the shaped body by centrifuging off still adhering photopolymerizable liquid.

4. Post-processing arrangement according to any of the preceding claims, **characterized in that** the cleaning station (22) is provided with a feeding device (30, 32) which is connected to at least one container (28) holding cleaning liquid, wherein the feeding device is connected by a flexible conduit (33) to the cleaning basin (26), wherein the flexible conduit (33) has a length that is sufficient in order to extend from the feeding device to the cleaning basin (26) in the cleaning position, and that the control unit (4) is arranged to control the feeding device such that the cleaning basin (26), while it is lifted up by the lifting apparatus (46) to the cleaning position and/or after it has been lifted up by the lifting apparatus (46) to the cleaning position, is filled with cleaning liquid and to control the operation of the cleaning station during the cleaning process.

5. Post-processing arrangement according to claim 3 or 4, **characterized in that** the control unit (4) is furthermore arranged to activate the motor connected to the holder (48) while the cleaning process is carried out and to thereby set the shaped body (1) in rotation in the cleaning liquid in order to intensify the cleaning effect.

6. Post-processing arrangement according to claim 4 or 5, **characterized in that** the cleaning station (22) is connected to at least two containers (28) holding cleaning liquids, and that the feeding device is provided with a pump (30) and valves (32) which under control of the control unit selectively feed cleaning liquid from a selected one of the at least two containers (28) into the cleaning basin (26) and to pump the cleaning liquid out of the cleaning basin (26) again after completion of the cleaning process.

7. Post-processing arrangement according to one of the preceding claims, **characterized in that** the finishing station (42) is provided with at least two light sources for post-exposure wit different wavelengths, wherein the different wavelengths are within the range from 300 nm to 500 nm.

8. Post-processing arrangement according to one of the preceding claims, **characterized in that** the control unit (4) is connected to an input apparatus for receiving information about properties of the shaped body to be post-processed and is provided with a memory in which operating programs for the cleaning station (20) and the finishing station (42) and an allocation specification are stored which allocates operating programs according to the information on the properties of the shaped body, and that the control unit is arranged to retrieve the allocated operating programs after the information about the properties of the shaped body has been received and to control the cleaning station (22) and the finishing station (42) according to the retrieved operating programs.

9. Post-processing arrangement according to claim 8, **characterized in that** the input device is a manual input device for manual input of information about properties of the shaped body by a user.

10. Post-processing arrangement according to claim 8, **characterized in that** the input device comprises an automatic reading device which is designed to read a data storage medium including information on the properties of the shaped body, which data storage medium is connected to or associated with the shaped body.

11. Post-processing arrangement according to any of the preceding claims, **characterized in that** the holder (48) for suspending the shaped body (1) is configured such that the shaped body (1) is held hanging thereon such that it is freely accessible at least from the entire lower hemisphere for the radiation of the finishing station and the cleaning liquid of the cleaning basin (26) during the cleaning process.

12. Post-processing arrangement according to claim 11, **characterized in that** the holder (48) is configured such that a construction platform (6) with one or more shaped bodies (1) adhering thereto can be suspended on the holder or inserted in the holder, wherein the shaped body or the shaped bodies (1) are hanging thereon in a downwardly hanging orientation.

13. Post-processing arrangement according to any of the preceding claims, **characterized in that** the upper section (40) of the housing in which the finishing station (42) is accommodated, comprises in its outer wall a flap (44) which can be opened and which, when opened, allows access to the interior of the finishing station to suspend a shaped body (1) to be post-processed on the holder (48), and to allow to remove a post-processed shaped body from it.

14. Post-processing arrangement according to any of the preceding claims, **characterized in that** the upper section (40) and the lower section (20) of the housing are detachably connected to each other.

15. Post-processing arrangement according to any of the claims 2 to 14, **characterized in that** the upper section (40) has in its bottom wall an opening, and that the lower section (20) has an opening in its top wall which is aligned with the opening of the bottom wall of the upper section, wherein the openings together form the passage and wherein the closure (24) for selectively opening and closing the passage is arranged at the opening in the bottom wall of the upper section (40) or at the opening in the top wall of the lower section (20).

16. Post-processing arrangement according to claim 14 or 15, **characterized in that** the control unit (4) is housed in a detachable third section (60) of the housing, wherein the lower section (20) and the third section of the housing are designed such that the third section (60) can be attached to lower section (20) underneath it such that there is an electrical connection between the control unit (4) in the third section (60) and the lower and upper sections (20, 40).

## Revendications

1. Dispositif de finissage destiné à des corps moulés fabriqués de manière additive par photopolymérisation, qui comprend une station de nettoyage permettant de maintenir à disposition une cuve de nettoyage destinée au corps moulé et une station de post-durcissement permettant une exposition secondaire du corps moulé, **caractérisé en ce que** la station de nettoyage (22) et la station de post-durcissement (42) sont hébergées dans un boîtier (2) pouvant reposer sur une surface horizontale, au sein duquel la station de nettoyage (22) est hébergée dans une section inférieure (20) et la station de post-durcissement (42) est hébergée dans une section supérieure (40) située verticalement au-dessus de la section inférieure, dans lequel les sections inférieure et supérieure (20, 40) sont en liaison l'une avec l'autre grâce à un passage, **en ce qu'**un support (48) au niveau duquel le corps moulé (1) peut être suspendu directement ou indirectement dans une position appropriée pour l'exposition secondaire est mis en place dans la station de post-durcissement (42), **en ce que** la cuve de nettoyage (26) est supportée par un dispositif de levage (46) conçu pour pouvoir lever, et pouvoir abaisser à nouveau, la cuve de nettoyage (26) de manière verticale à travers le passage d'une position de maintien à disposition, au sein de la station de nettoyage (22), jusqu'à une position de nettoyage, au sein de la station de post-durcissement (42), dans laquelle le corps moulé (1) suspendu au support (48) de la cuve de nettoyage est accueilli, **en ce qu'**un dispositif de commande (4) est mis en place afin de commander le fonctionnement du dispositif de levage et des stations de nettoyage et de post-durcissement (22, 42) de sorte que, après positionnement du corps moulé (1) au niveau du support (48), le dispositif de levage (46) lève la cuve de nettoyage (26) jusque dans la position de nettoyage afin de nettoyer le corps moulé (1) dans la cuve de nettoyage grâce à du liquide de nettoyage et afin, une fois l'opération de nettoyage terminée, de déplacer la cuve de nettoyage (26) vers le bas grâce au dispositif de levage (46) jusque dans la position de maintien à disposition au sein de la station de nettoyage et de commander ensuite le fonctionnement de la station de post-durcissement (42) en vue de l'exposition secondaire.

2. Dispositif de finissage selon la revendication 1, **caractérisé en ce que** le passage est muni (i) d'une fermeture (24) pouvant être ouverte et fermée par le dispositif de commande, dans lequel le dispositif de commande est dans ce cas conçu pour ouvrir la fermeture (24) avant que la cuve de nettoyage (26) soulevée par le dispositif de levage ne franchisse le passage, et pour fermer la fermeture (24) après que la cuve de nettoyage (26) a été descendue dans la station de nettoyage grâce au dispositif de levage (46) une fois l'opération de nettoyage terminée, ou est muni (ii) d'une fermeture qui est ouverte de manière passive grâce au levage de la cuve de nettoyage (26) et se referme de manière passive après l'abaissement de la cuve de nettoyage (26).

3. Dispositif de finissage selon la revendication 1 ou 2, **caractérisé en ce que** le support (48) est monté rotatif autour d'un axe vertical et **en ce qu'**un moteur est présent, lequel moteur agit sur le support (48) afin de le mettre en rotation avec le corps moulé qui y est suspendu afin de nettoyer le corps moulé par essorage du liquide photopolymérisable qui adhère encore.

4. Dispositif de finissage selon l'une quelconque des revendications précédentes, **caractérisé en ce que** la station de nettoyage (22) est munie d'un dispositif de transport (30, 32) qui est relié à au moins un récipient (28) destiné à du liquide de nettoyage, dans lequel le dispositif de transport est en outre relié par l'intermédiaire d'une conduite flexible (33) à la cuve de nettoyage (26), dans lequel la conduite flexible (33) possède une longueur suffisante pour aller du dispositif de transport jusqu'à la cuve de nettoyage (26) dans la position de nettoyage, et **en ce que** le dispositif de commande (4) est conçu pour commander le fonctionnement du dispositif de transport de manière à remplir la cuve de nettoyage (26) de liquide de nettoyage pendant qu'elle est levée dans la position de nettoyage grâce au dispositif de levage (46) et/ou après qu'elle a été levée dans la position de nettoyage grâce au dispositif de levage (46) et de manière à commander le fonctionnement de la station de nettoyage lors de l'opération de nettoyage.

5. Dispositif de finissage selon la revendication 3 ou 4, **caractérisé en ce que** le dispositif de commande (4) est en outre conçu pour activer le moteur relié au support (48) lors de la mise en œuvre de l'opération de nettoyage et mettre ainsi le corps moulé (1) en rotation dans le liquide de nettoyage afin d'intensifier l'action nettoyante.

6. Dispositif de finissage selon la revendication 4 ou 5, **caractérisé en ce que** la station de nettoyage (22) est reliée à au moins deux récipients (28) contenant des liquides de nettoyage et le dispositif de transport est muni d'une pompe (30) et de robinets (32) qui, sous la commande du dispositif de commande, transportent de manière sélective le liquide de nettoyage de l'un, sélectionné, des au moins deux récipients (28) jusque dans la cuve de nettoyage (26) et le pompent hors de la cuve de nettoyage (26) une fois l'opération de nettoyage terminée.

7. Dispositif de finissage selon l'une quelconque des revendications précédentes, **caractérisé en ce que** la station de post-durcissement (42) est munie d'au moins deux sources lumineuses destinées à l'exposition secondaire et présentant différentes longueurs d'onde, dans lequel les différentes longueurs d'onde se situent dans la plage comprise entre 300 nm et 500 nm.

8. Dispositif de finissage selon l'une quelconque des revendications précédentes, **caractérisé en ce que** le dispositif de commande (4) est relié à un dispositif de réception permettant de recevoir des informations sur les propriétés du corps moulé à finir et est relié à une mémoire au sein de laquelle sont stockés un certain nombre de programmes d'exploitation destinés à la station de nettoyage (22) et à la station de post-durcissement (42) et une règle d'association qui associe les programmes d'exploitation conformément aux informations sur les propriétés du corps moulé, et **en ce que** le dispositif de commande (4) est conçu pour appeler et faire fonctionner les programmes d'exploitation associés après réception des informations sur les propriétés du corps moulé, et pour commander la station de nettoyage (22) et la station de post-durcissement (42) conformément aux programmes d'exploitation appelés.

9. Dispositif de finissage selon la revendication 8, **caractérisé en ce que** le dispositif de réception est un dispositif de saisie manuelle permettant la saisie manuelle d'informations sur les propriétés du corps moulé par un utilisateur.

10. Dispositif de finissage selon la revendication 8, **caractérisé en ce que** le dispositif de réception comprend un dispositif de lecture automatique conçu pour la lecture d'un support de données relié ou associé au corps moulé et contenant des informations sur les propriétés du corps moulé.

11. Dispositif de finissage selon l'une quelconque des revendications précédentes, **caractérisé en ce que** le support (48) permettant de suspendre le corps moulé (1) est conçu de sorte que le corps moulé (1) est maintenu suspendu à celui-ci de sorte qu'il est librement accessible à l'irradiation de la station de post-durcissement et au liquide de nettoyage de la cuve de nettoyage (26) au moins à partir de l'ensemble de l'hémisphère inférieur pendant l'opération de nettoyage.

12. Dispositif de finissage selon la revendication 11, **caractérisé en ce que** le support (48) est conçu pour suspendre ou mettre en place au niveau du support (48) une plate-forme de montage (6) à laquelle est/sont accroché(s) un ou plusieurs corp(s) moulé(s) (1) y adhérant, dans lequel le ou les corps moulés (1) est/sont suspendu(s) à la plate-forme de montage (6) en pointant vers le bas.

13. Dispositif de finissage selon l'une quelconque des revendications précédentes, **caractérisé en ce que** la section supérieure (40) du boîtier au sein de laquelle est hébergée la station de post-durcissement (42) présente dans sa paroi extérieure un volet (44) à ouvrir qui, une fois ouvert, donne accès à l'intérieur de la station de post-durcissement (42) afin de suspendre un corps moulé (1) à finir au support (48) et de retirer un corps moulé fini.

14. Dispositif de finissage selon l'une quelconque des revendications précédentes, **caractérisé en ce que** la section supérieure (40) et la section inférieure (20) du boîtier sont reliées l'une à l'autre de manière détachable.

15. Dispositif de finissage selon l'une quelconque des revendications 2 à 14, **caractérisé en ce que** la section supérieure (40) présente une ouverture dans sa paroi de fond et la section inférieure (20) présente dans sa paroi supérieure une ouverture alignée avec l'ouverture de la paroi inférieure, dans lequel les ouvertures forment ensemble le passage et la fermeture (24) permettant d'ouvrir et fermer de manière sélective le passage au niveau de l'ouverture est agencée dans la paroi inférieure de la section supérieure (40) ou au niveau de l'ouverture dans la paroi supérieure de la section inférieure (20).

16. Dispositif de finissage selon la revendication 14 ou 15, **caractérisé en ce que** le dispositif de commande (4) est hébergé dans une troisième section (60) détachable du boîtier (2), dans lequel la section inférieure (20) et la troisième section du boîtier sont conçues de sorte que la troisième section peut être fixée à la section inférieure (20) en-dessous de celle-ci de sorte que la section inférieure et la section supérieure (20, 40) sont supportées par la troisième section (60), et une liaison électrique existe entre le dispositif de commande (4), au sein de la troisième section, et les sections inférieure et supérieure (20, 40).
